# EUROPEAN PATENT SPECIFICATION

(11) **EP 1 905 035 B1**
(45) Date of publication and mention of the grant of the patent: **03.07.2013**
(21) Application number: 06823595.1
(22) Date of filing: 19.07.2006
(51) Int. Cl.: G11B 27/32, G11B 27/34, G11B 27/30, G06F 17/30, H04S 3/00

(54) **AUDIO REPRODUCTION METHOD AND APPARATUS SUPPORTING AUDIO THUMBNAIL FUNCTION**
AUDIOWIEDERGABEVERFAHREN UND VORRICHTUNG MIT AUDIOMINIATURFUNKTION
PROCEDE ET APPAREIL DE REPRODUCTION AUDIO SUPPORTANT UNE FONCTION VIGNETTE AUDIO

(30) Priority: 19.07.2005 US 700331 P; 25.08.2005 KR 20050078427
(43) Date of publication of application: 02.04.2008
(73) Proprietor: Samsung Electronics Co., Ltd., Suwon-si, Gyeonggi-do, 443-742 (KR)
(72) Inventor: OH, Yoon-Hark, Gyeonggi-do 441-740 (KR)
(74) Representative: D'Halleweyn, Nele Veerle Trees Gertrudis
(86) International application number: PCT/KR2006/002815
(87) International publication number: WO 2007/027013

(56) References cited:
- EP-A1- 1 296 519
- EP-A1- 1 435 620
- US-A1- 2001 003 813
- US-A1- 2004 064 209
- US-A1- 2005 091 062
- GEORGE TZANETAKIS, PERRY COOK: "Marsyas3D: A Prototype Audio Browser-Editor Using a Large Scale Immersive Visual and Audio Display" PROCEEDINGS OF THE 2001 INTERNATIONAL CONFERENCE ON AUDITORY DISPLAY, 29 July 2001 (2001-07-29), - 1 August 2001 (2001-08-01) pages 250-254, XP002565342 Espoo, Finland
- EOIN BRAZIL, MIKAEL FERNSTRÖM, GEROGE TZANETAKIS, PERRY COOK: "Enhancing Sonic Browsing Using Audio Information Retrieval" PROCEEDINGS OF THE 2002 INTERNATIONAL CONFERENCE ON AUDITORY DISPLAY, 2 July 2002 (2002-07-02), - 5 July 2002 (2002-07-05) pages 1-6, XP002565343 Kyoto, Japan
- EOIN BRAZIL, MIKAEL FERNSTRÖM: "Audio information browsing with the Sonic Browser" PROCEEDINGS OF THE INTERNATIONAL CONFERENCE ON COORDINATED AND MULTIPLE VIEWS IN EXPLORATORY VISUALIZATION, 2003, 15 July 2003 (2003-07-15), pages 26-31, XP002565344
- MIKAEL FERNSTRÖM, CAOLAN MCNAMARA: "After Direct Manipulation - Direct Sonification" INTERNATIONAL CONFERENCE ON AUDITORY DISPLAY, 1 November 1998 (1998-11-01), - 4 November 1998 (1998-11-04) XP002565345 Glasgow, UK

## Description

### Technical Field

The present invention relates to an audio reproduction method and apparatus. In particular, the present invention relates to an audio reproduction method and apparatus for supporting an audio thumbnail function.

### Background Art

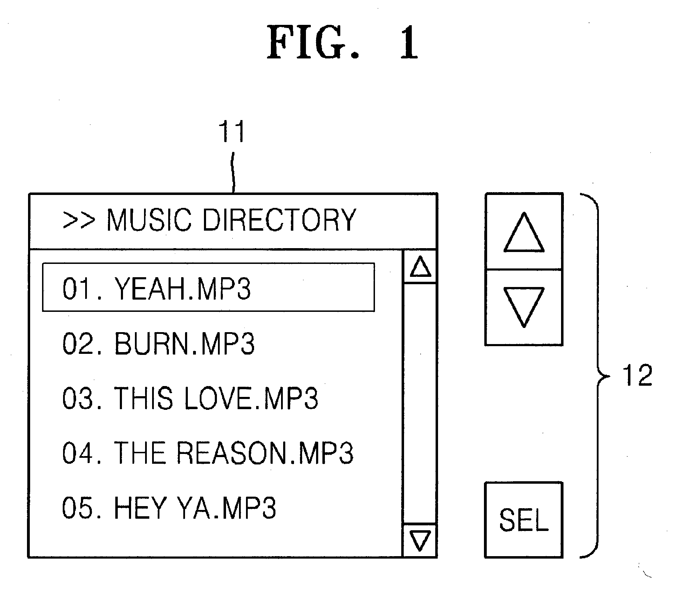

FIG. 1 is a diagram illustrating a user interface in a conventional audio reproduction apparatus. Referring to FIG. 1, the user interface in the conventional audio reproduction apparatus displays a plurality of audio files on a display screen 11. A user can reviews this display screen and then presses a search button of an input panel 12 to review different one of a plurality of audio files and high light of audio file the user wants to hear. The user interface responds by moving to the audio file that the user wants to hear. In addition, the user can press a selection button of the input panel 12, thereby selecting and listening to the audio file.

However, in the conventional audio reproduction apparatus, the user must continue to press the search button until the audio file that the user wants to hear is displayed on the display screen 11. In particular, when the user wants to perform a search while listening to audio files, the user must select the audio files one by one to reproduce them. Thus, it takes a lot of time and perseverance to select the audio files.

Accordingly, there is a need for an improved apparatus and method for selecting and reproducing audio files .

### Disclosure of Invention

### Technical Solution

Recently, many portable reproduction apparatuses for supporting an image viewer have been produced. The portable reproduction apparatuses support functions of storing, searching, and reproducing an image selected by a user. If many images are stored in such a portable reproduction apparatus, it takes a long time for the user to reproduce the images one by one when searching for a desired image and this is very inconvenient. Accordingly, a recent portable reproduction apparatus provides a thumbnail function of simultaneously displaying several images in a small size on a screen. An aspect of exemplary embodiments of the present invention is to address at least the above problems and/or disadvantages and to provide at least the advantages described below. Accordingly, an aspect of exemplary embodiments of the present invention is to provide an audio reproduction method and apparatus for supporting an audio thumbnail function that is similar to the above-described image thumbnail function.

An aspect of exemplary embodiments of the present invention is also to provide a computer-readable recording medium having recorded thereon a program for executing the audio reproduction method.

### Advantageous Effects

According to an exemplary embodiment of the present invention, audio thumbnails that represent each of a plurality of audio files are simultaneously output and one of the audio files is output based on a selection of a user who has simultaneously heard the audio thumbnails such that the user can search several audio files at a time and can more quickly select and listen to desired audio files. In particular, an exemplary embodiment of the present invention is significant in that it creates a new paradigm for searching MP3 files and other audio files.

### Description of Drawings

FIG. 1 is a diagram illustrating a user interface in a conventional audio reproduction apparatus;

FIG. 2 is a diagram illustrating a structure of a first audio reproduction apparatus according to an exemplary embodiment of the present invention;

FIG. 3 is a diagram illustrating an audio thumbnail according to an exemplary embodiment of the present invention;

FIG. 4 is a diagram illustrating a user interface according to an exemplary embodiment of the present invention;

FIG. 5 is a diagram illustrating a detailed structure of a sound controller and a first output controller illustrated in FIG. 2 according to an exemplary embodiment of the present invention;

FIG. 6 is a diagram illustrating a detailed structure of first through fourth sound-localization units illustrated in FIG. 5 according to an exemplary embodiment of the present invention;

FIG. 7 is a diagram illustrating an example in which the user simultaneously hears - audio thumbnails by using the first audio reproduction apparatus illustrated in FIG. 2;

FIG. 8 is a diagram illustrating an example in which the user selects one of the audio thumbnails by using the first audio reproduction apparatus illustrated in FIG. 2;

FIG. 9 is a diagram illustrating an example in which the user hears audio files selected by using the first audio reproduction apparatus illustrated in FIG. 2;

FIG. 10 is a diagram illustrating a structure of a second audio reproduction apparatus according to another exemplary embodiment of the present invention;

FIG. 11 is a diagram illustrating an example in which the user simultaneously hears audio thumbnails by using the second audio reproduction apparatus illustrated in FIG. 10;

FIG. 12 is a diagram illustrating an example in which the user selects one of the audio thumbnails by using the second audio reproduction apparatus illustrated in FIG. 10;

FIGS. 13 and 14 are flowcharts illustrating a first audio reproduction method according to an exemplary embodiment of the present invention; and

FIGS. 15 and 16 are flowcharts illustrating a second audio reproduction method according to an exemplary embodiment of the present invention.

### Best Mode

According to an aspect of exemplary embodiments of the present invention, an audio reproduction method is provided. The method comprises sound-localizing audio thumbnails that respectively represent a predetermined number of audio files into the same number as predetermined number of audio files of directions, simultaneously outputting the sound-localized audio thumbnails, and outputting at least one of the audio files based on a selection of a user who has heard the simultaneously-output audio thumbnails.

According to an aspect of exemplary embodiments of the present invention, an audio reproduction apparatus is provided. The apparatus comprises a sound controller for sound-localizing audio thumbnails that respectively represent a predetermined number of audio files into a predetermined number of directions, a first output controller for simultaneously outputting the audio thumbnails sound-localized by the sound controller, and a second output controller for outputting at least one of the audio files based on a selection of a user who has heard the audio thumbnails simultaneously-output by the first output controller.

According to an aspect of exemplary embodiments of the present invention, a computer-readable recording medium having recorded thereon a program for executing the audio reproduction method is provided.

According to an aspect of exemplary embodiments of the present invention, computer-readable recording medium having recorded thereon a program for executing the audio reproduction method is provided. Wherein the program controls the audio reproduction apparatus according to a process comprises sound-localizing audio thumbnails that respectively represent a predetermined number of audio files into a predetermined number of directions, simultaneously outputting the sound-localized audio thumbnails, and outputting at least one of the audio files based on a selection of a user who has heard the simultaneously-output audio thumbnails.

According to an aspect of exemplary embodiments of the present invention, an audio reproduction apparatus is provided. The apparatus comprises a channel allocating unit for allocating channels in a predetermined number of directions to audio thumbnails that respectively represent the predetermined number of audio files, a first output controller for separating the audio thumbnails having the channels allocated by the channel allocating unit into the channels and simultaneously outputting them, and a second output controller for outputting at least one of the audio files based on a selection of a user who has heard the simultaneously-output audio thumbnails output by the first output controller.

According to an aspect of exemplary embodiments of the present invention, a computer-readable recording medium having recorded thereon a program for executing the audio reproduction method is provided.

According to an aspect of exemplary embodiments of the present invention, an audio reproduction method is provided. The method comprises simultaneously outputting audio thumbnails that respectively represent a predetermined number of audio files, and outputting one of the audio files based on a selection of a user who has heard the simultaneously-output audio thumbnails.

According to an aspect of exemplary embodiments of the present invention, a computer-readable recording medium having recorded thereon a program for executing the audio reproduction method is provided.

### Mode for Invention

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness. The present invention will now be described more fully with reference to the accompanying drawings, in which exemplary embodiments of the invention are shown.

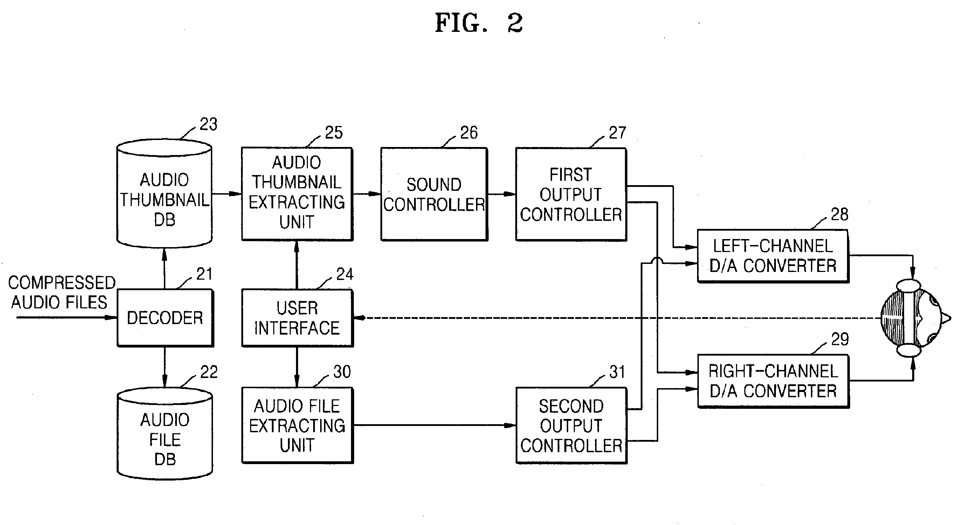

FIG. 2 is a diagram illustrating a structure of a first audio reproduction apparatus according to an exemplary embodiment of the present invention. Referring to FIG. 2, the first audio reproduction apparatus comprises a decoder 21, an audio file database 22, an audio thumbnail database 23, a user interface 24, an audio thumbnail extracting unit 25, a sound controller 26, a first output controller 27, a left-channel digital/analog (D/A) converter 28, a right-channel D/A converter 29, an audio file extracting unit 30, and a second output controller 31.

The decoder 21 decodes compressed audio files obtained via the Internet to restore audio files in the form of a pulse code modulation (PCM) signal. A method of compressing audio files comprises moving picture experts group (MPEG) layer 3 (MP3). If the compressed audio files are MP3 files, the decoder 21 decodes the compressed audio files according to MP3 specification to restore the audio files in the form of PCM signals.

The audio file database 22 stores the audio files restored by the decoder 21.

The audio thumbnail database 23 generates audio thumbnails that represent the audio files from the audio files restored by the decoder 21, and stores the audio thumbnails.

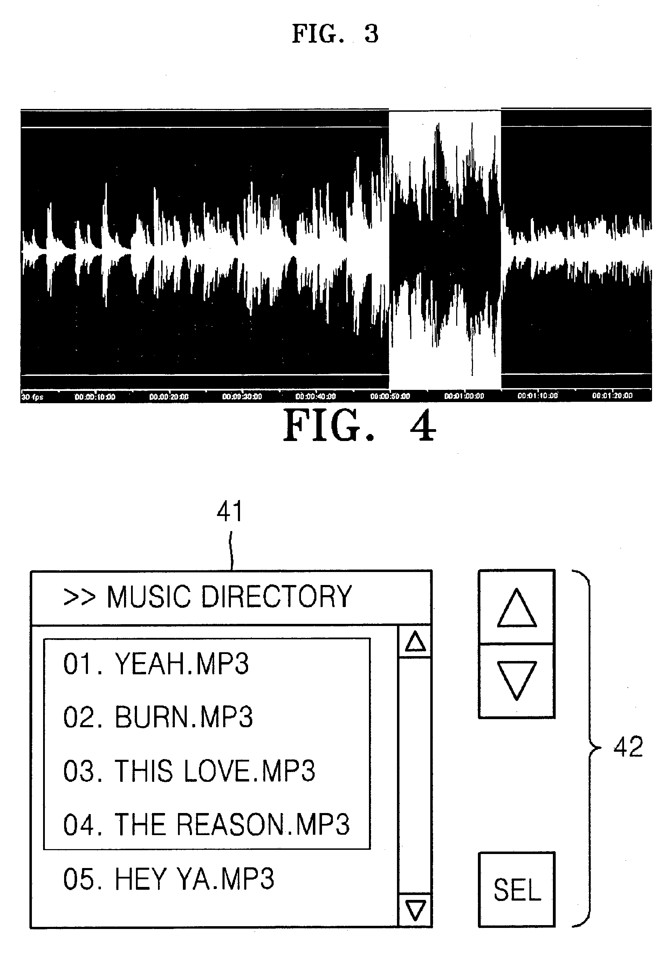

FIG. 3 is a diagram illustrating an audio thumbnail according to an exemplary embodiment of the present invention. Referring to FIG. 3, the audio thumbnail means a partial section most effective for a user to recognize the title of a song, for example, a climax section or a starting section of an audio file.

Referring to FIG. 3, when the climax section of the audio file is selected as an audio thumbnail, the audio thumbnail database 23 extracts only the climax section of the audio file from the audio file, thereby generating the audio thumbnail that represents the audio file. In particular, the audio thumbnail database 23 may extract audio thumbnails manually based on a user's selection or analyze a signal waveform of the audio file and extract audio thumbnails automatically based on the analyzed result.

The user interface 24 displays the audio thumbnails stored in the audio thumbnail database 23 to the user and receives selection information on a predetermined number of audio thumbnails among the audio thumbnails from the user who has recognized the display. Hereinafter, an exemplary embodiment of the present invention will be described based on an assumption that the predetermined number, that is, a unit for processing audio thumbnails in the current embodiment is 4. It will be understood by those skilled in the art that the predetermined number may be any arbitrary plural number other than 4.

FIG. 4 is a diagram illustrating a user interface 24 according to an exemplary embodiment of the present invention. Referring to FIG. 4, the user interface 24 displays the audio thumbnails stored in the audio thumbnail database 23 on a display screen 41 attached to the first audio reproduction apparatus illustrated in FIG. 2, and receives selection information on one of four audio thumbnails using an input panel 42 attached to the first audio reproduction apparatus illustrated in FIG. 2 from the user who has recognized the display.

The audio thumbnail extracting unit 25 extracts the four audio thumbnails from the audio thumbnails stored in the audio thumbnail database 23 based on the selection information received by the user interface 24. That is, the audio thumbnail extracting unit 25 extracts the four audio thumbnails indicated by the selection information received by the user interface 24 from the audio thumbnails stored in the audio thumbnail database 23.

The sound controller 26 sound-localizes the audio thumbnails extracted by the audio thumbnail extracting unit 25 in four directions. In general, a sound source is the position of sound that actually exists in a user's space, a sound phase is the position of virtual sound that the user has perceived, and sound-localization is to localize a virtual sound source in a predetermined position. According to the current exemplary embodiment of the present invention, the four directions are directions in which, when the four audio thumbnails are output, the user can most easily identify the four audio thumbnails. In the current embodiment, the four directions extend at 30° and - 30 ° in front of a user, in relation to a user's point of view, and 110° and - 110° behind the user, also in relation to the user's point of view.

More specifically, the sound controller 26 sound-localizes the audio thumbnails extracted by the audio thumbnail extracting unit 25 using a head related transfer function (HRTF) in the four directions. The HRTF is an acoustic transfer function between the sound source and a user's eardrum and is usually used to convert multi-channel signals into two-channel virtual three-dimensional sound.

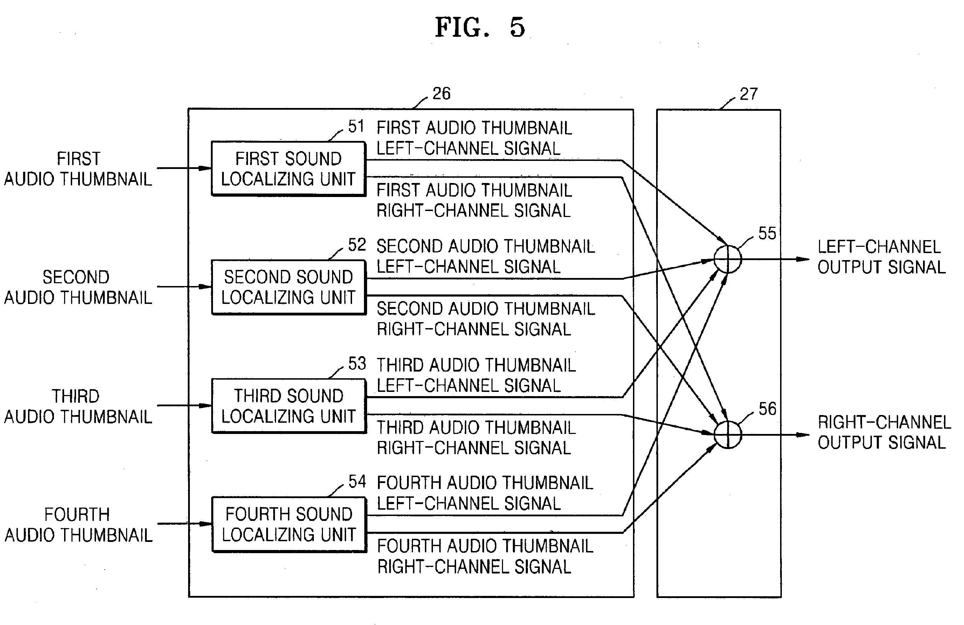

FIG. 5 is a diagram illustrating a detailed structure of the sound controller 26 and the first output controller 27 illustrated in FIG. 2 according to an exemplary embodiment of the present invention. Referring to FIG. 5, the sound controller 26 comprises a first sound-localization unit 51, a second sound-localization unit 52, a third sound-localization unit 53, and a fourth sound-localization unit 54. If a unit for processing audio thumbnails in the current embodiment is N, it will be understood by those skilled in the art that the sound controller 26 comprises N sound-localization units.

The first sound-localization unit 51 performs convolution on a first audio thumbnail extracted by the audio thumbnail extracting unit 25 and left/right HRTF coefficient pairs which correspond to a user's forward right direction, thereby generating a first audio thumbnail left-channel signal and a first audio thumbnail right-channel signal which correspond to a sound source in a user's forward right direction.

The second sound-localization unit 52 performs convolution on a second audio thumbnail extracted by the audio thumbnail extracting unit 25 and left/right HRTF coefficient pairs which corresponds to a user's forward left direction, thereby generating a second audio thumbnail left-channel signal and a second audio thumbnail right-channel signal which correspond to a sound source in a user's forward left direction.

The third sound-localization unit 53 performs convolution on a third audio thumbnail extracted by the audio thumbnail extracting unit 25 and left/right HRTF pairs which corresponds to a user's backward left direction, thereby generating a third audio thumbnail left-channel signal and a third audio thumbnail right-channel signal which correspond to a sound source in a user's backward left direction.

The fourth sound-localization unit 54 performs convolution on a fourth audio thumbnail extracted by the audio thumbnail extracting unit 25 and left/right HRTF coefficient pairs which corresponds to a user's backward right direction, thereby generating a fourth audio thumbnail left-channel signal and a fourth audio thumbnail right-channel signal which correspond to a sound source in a user's backward right direction.

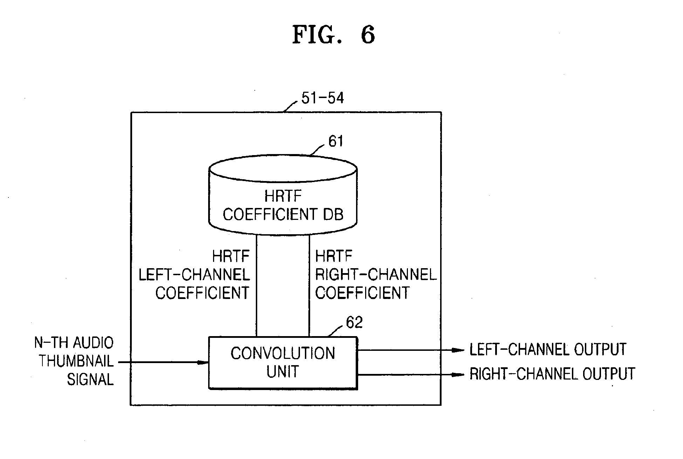

FIG. 6 is a diagram illustrating a detailed structure of the first through fourth sound-localization units 51 through 54 illustrated in FIG. 5 according to an exemplary embodiment of the present invention. Referring to FIG. 6, each of the first through fourth sound-localization units 51 through 54 illustrated in FIG. 5 comprises a head related transfer function (HRTF) coefficient database 61 and a convolution unit 62.

The HRTF coefficient database 61 stores left and right HRTF coefficient pairs calculated by using positions of sound sources corresponding to the four directions as models.

The convolution unit 62 performs convolution on an N-th audio thumbnail extracted by the audio thumbnail extracting unit 25 and a left/right HRTF coefficient pair corresponding to a direction allocated to the N-th audio thumbnail among the left/right HRTF pairs stored in the HRTF coefficient database 61, thereby generating an N-th audio thumbnail left-channel signal and an N-th audio thumbnail right-channel signal.

Referring to FIG. 2, the first output controller 27 outputs audio thumbnails sound-localized by the sound controller 26 in four directions preferably simultaneously. More specifically, the first output controller 27 synthesizes signals of the audio thumbnails sound-localized by the sound controller 26, thereby generating a left-channel output signal and a right-channel output signal and outputting them simultaneously.

Referring to FIG. 5, the first output controller 27 comprises a first synthesizing portion 55 and a second synthesizing portion 56.

The first synthesizing portion 55 synthesizes the audio thumbnail left-channel signals generated by the first through fourth sound controllers 51 through 54, for thereby generating a left-channel output signal to be output to a left speaker of a user's headphones.

The second synthesizing portion 56 synthesizes the audio thumbnail right-channel signals generated by the first through fourth sound controllers 51 through 54, for thereby generating a right-channel output signal to be output to a right speaker of the user's headphones.

Referring to FIG. 2, the left-channel D/A converter 28 converts a left-channel output signal output from the first output controller 27 into an analog signal and outputs the analog signal to the left speaker of the user's headphones. The left-channel output signal output from the first output controller 27 is a digital signal in the form of a PCM signal and should be converted into an analog signal so that the user can hear sound corresponding to the left-channel output signal. As such, the user hears left sound of the four audio thumbnails that are virtually and three-dimensionally processed through the left speaker of the headphones.

The right-channel D/A converter 29 converts a right-channel output signal output from the first output controller 27 into an analog signal and outputs the analog signal to the right speaker of the user's headphones. The right-channel output signal output from the first output controller 27 is a digital signal in the form of a PCM signal and should be converted into an analog signal so that the user can hear sound corresponding to the right-channel output signal. As such, the user hears right sound of the four audio thumbnails that are virtually and three-dimensionally processed through the right speaker of the headphones.

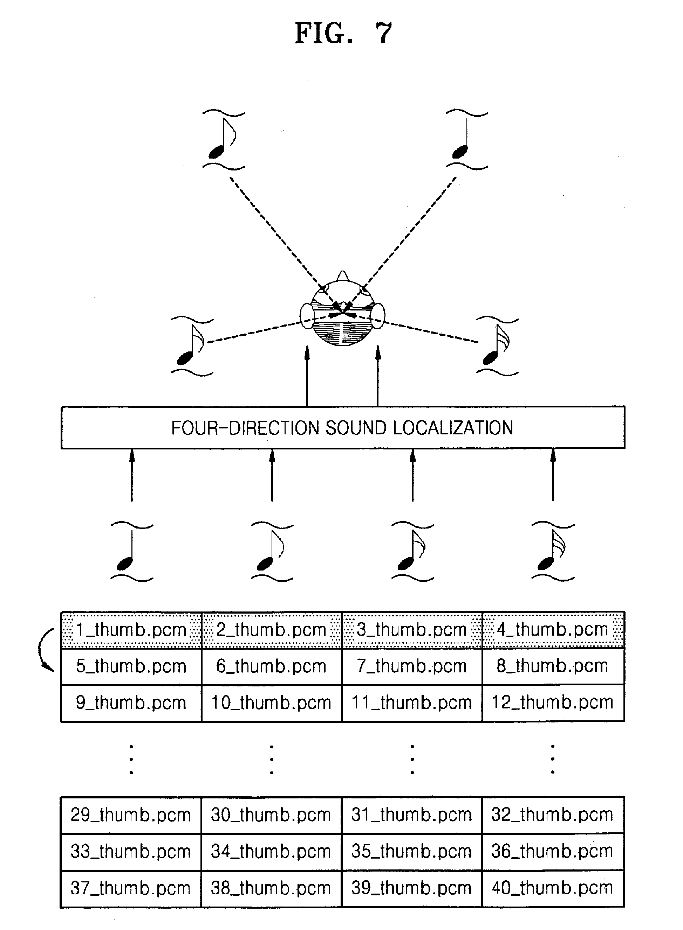

FIG. 7 is a diagram illustrating an example in which the user hears the audio thumbnails preferably simultaneously by using the first audio reproduction apparatus illustrated in FIG. 2. Referring to FIG. 7, the user hears the preferably simultaneously-output audio thumbnails sound-localized in the four directions using the first audio reproduction apparatus illustrated in FIG. 2. That is, the user hears a first audio thumbnail 1_thumb.pcm from a virtual sound source in a user's forward right direction, hears a second audio thumbnail 2_thumb.pcm from the virtual sound source in a user's forward left direction, hears a third audio thumbnail 3_thumb.pcm from a virtual sound source in a user's backward left direction, and hears a fourth audio thumbnail 4_thumb.pcm from the virtual sound source in a user's backward right direction

Referring to FIG. 2, the user interface 24 receives selection information on at least one of the four audio thumbnails by using the input panel 42 attached to the first audio reproduction apparatus illustrated in FIG. 2 from the user who has heard the simultaneously-output four audio thumbnails that are virtually and three-dimensionally processed through the user's headphones.

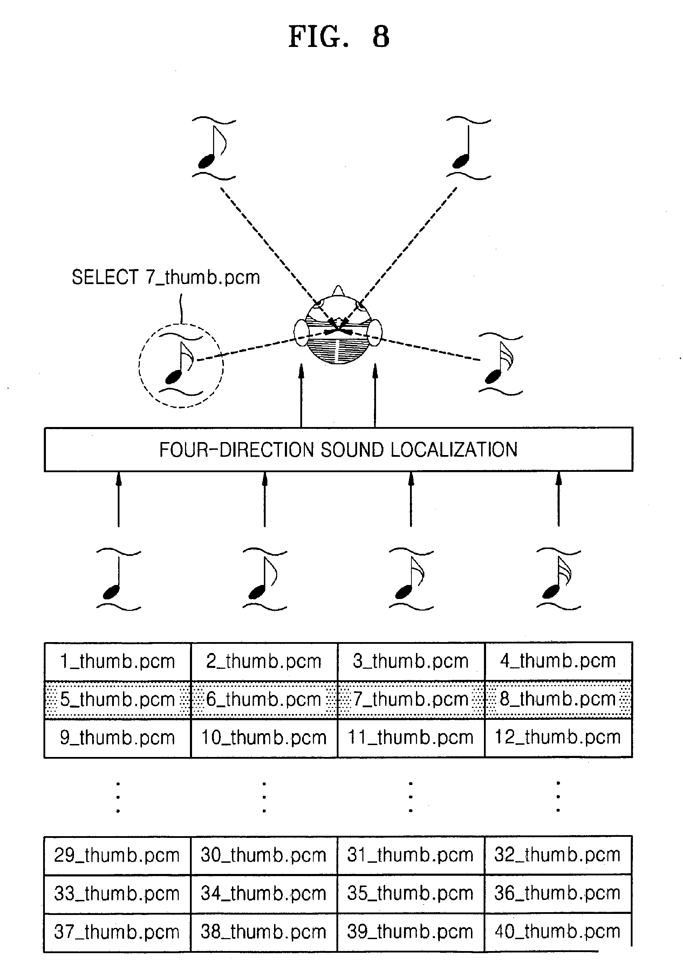

FIG. 8 is a diagram illustrating an example in which the user selects at least one of the audio thumbnails by using the first audio reproduction apparatus illustrated in FIG. 2. Referring to FIG. 8, the user simultaneously hears the audio thumbnails 1_thumb.pcm, 2_thumb.pcm, 3_thumb.pcm, and 4_thumb.pcm sound-localized in the four directions by using the first audio reproduction apparatus illustrated in FIG. 2. Subsequently, the user presses the search button of the input panel 42 attached to the first audio reproduction apparatus and hears sound output from next audio thumbnails 5_thumb.pcm, 6_thumb.pcm, 7_thumb.pcm, and 8_thumb.pcm sound-localized in the four directions. Subsequently, the user presses the selection button of the input panel 42 attached to the first audio reproduction apparatus illustrated in FIG. 2 to select at le ast one of the audio thumbnails, that is, 7_thumb.pcm.

Referring to FIG. 2, the audio file extracting unit 30 extracts at least one of the audio files stored in the audio file database 22 based on the selection information received by the user interface 24. That is, the audio file extracting unit 30 extracts an audio file indicated by the selection information received by the user interface 24 from the audio files stored in the audio file database 22.

The second output controller 31 generates a left-channel output signal and a right-channel output signal from the audio files extracted by the audio file extracting unit 30 and outputs the signals. That is, the second output controller 31 outputs at least one of the audio files stored in the audio file database 22 based on the selection information received by the user interface 24.

The left-channel D/A converter 28 converts the left-channel output signal output from the second output controller 31 into an analog signal and outputs the analog signal to the left speaker of the user's headphones. The left-channel output signal output from the second output controller 31 is a digital signal in the form of a PCM signal and should be converted into an analog signal so that the user can hear sound corresponding to the left-channel output signal. As such, the user hears a left sound of the selected audio files through the left speaker of the headphones.

The right-channel D/A converter 29 converts the right-channel output signal output from the second output controller 31 into an analog signal and outputs the analog signal to the right speaker of the user's headphones. The right-channel output signal output from the second output controller 31 is a digital signal in the form of a PCM signal and should be converted into an analog signal so that the user can hear sound corresponding to the right-channel output signal. As such, the user hears right sound of the selected audio files through the right speaker of the headphones.

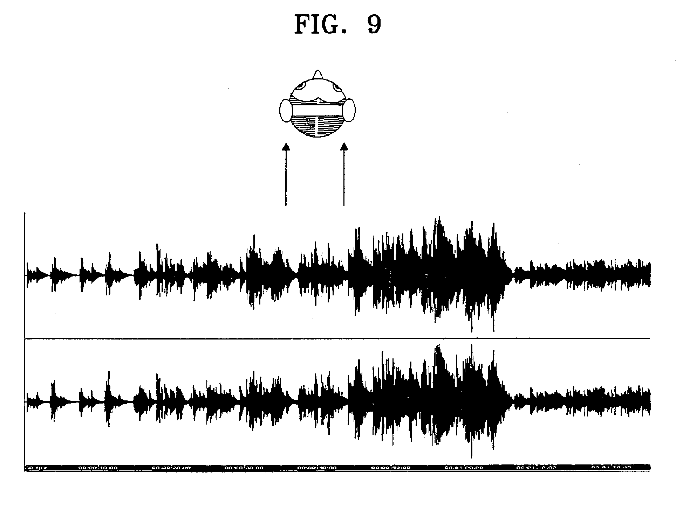

FIG. 9 is a diagram illustrating an example in which the user hears the audio files selected by using the first audio reproduction apparatus illustrated in FIG. 2. Referring to FIG. 9, the user hears the audio thumbnails by using the first audio reproduction apparatus illustrated in FIG. 2 and subsequently, can hear the previous section 7_song.pcm of the audio files in which the selected audio thumbnail 7_thumb.pcm is used as a partial section.

The current embodiment is a simple example in which the present invention can be implemented. It will be understood by those skilled in the art that reverberation effects or removal of cross-talk other than the above-described elements can be added so that the user can feel more the sense of 'being there'.

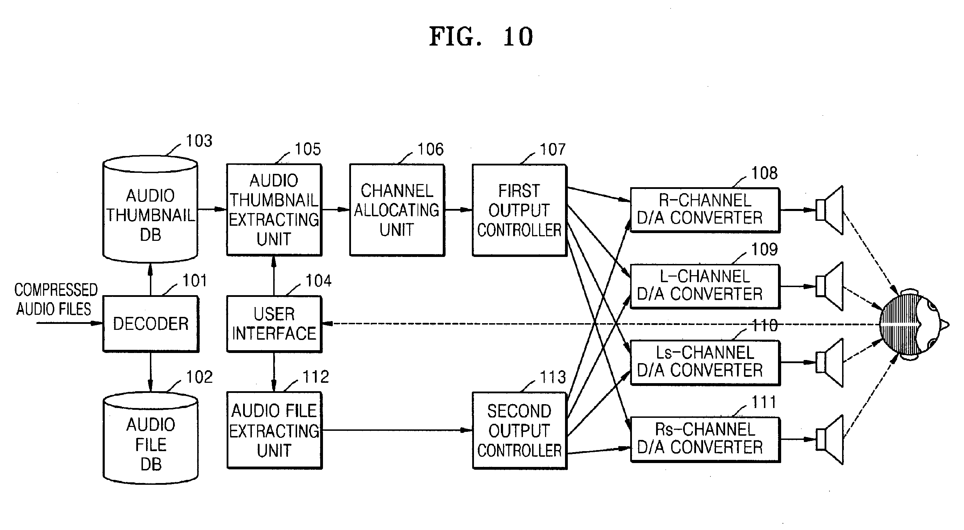

FIG. 10 is a diagram illustrating a structure of a second audio reproduction apparatus according to an exemplary embodiment of the present invention. Referring to FIG. 10, the second audio reproduction apparatus comprises a decoder 101, an audio file database 102, an audio thumbnail database 103, a user interface 104, an audio thumbnail extracting unit 105, a channel allocating unit 106, a first output controller 107, a first channel D/A converter 108, a second channel D/A converter 109, a third channel D/A converter 110, a fourth channel D/A converter 111, an audio file extracting unit 112, and a second output controller 113.

The decoder 101 decodes compressed audio files obtained via the Internet to restore audio files in the form of a PCM signal. If the compressed audio files are MP3 files, the decoder 101 decodes the compressed audio files according to MP3 specification to restore the audio files in the form of PCM signals.

The audio file database 102 stores the audio files restored by the decoder 21.

The audio thumbnail database 103 generates audio thumbnails that represent the audio files from the audio files restored by the decoder 101, and stores the audio thumbnails. In particular, the audio thumbnail database 103 may extract audio thumbnails manually based on a user's selection or analyze a signal waveform of the audio file and extract audio thumbnails automatically based on the analyzed result.

The user interface 104 displays the audio thumbnails stored in the audio thumbnail database 103 to the user and receives selection information on a predetermined number of audio thumbnails among the audio thumbnails from the user who has recognized the display. Hereinafter, the exemplary embodiment of the present invention will be described based on an assumption that the predetermined number, that is, a unit for processing audio thumbnails in the current embodiment is 4. It will be understood by those skilled in the art that the predetermined number may be any arbitrary plural number other than 4.

Referring to FIG. 4, the user interface 104 displays the audio thumbnails stored in the audio thumbnail database 103 on the display screen 41 which is attached to the second audio reproduction apparatus illustrated in FIG. 10, and receives selection information on one of four audio thumbnails using the input panel 42 which is attached to the second audio reproduction apparatus illustrated in FIG. 10 from the user who has recognized the display.

The audio thumbnail extracting unit 105 extracts the four audio thumbnails from the audio thumbnails stored in the audio thumbnail database 103 based on the selection information received by the user interface 104. That is, the audio thumbnail extracting unit 25 extracts the four audio thumbnails indicated by the selection information received by the user interface 104 from the audio thumbnails stored in the audio thumbnail database 103.

The channel allocating unit 106 allocates channels each having four directions to the audio thumbnails extracted by the audio thumbnail extracting unit 105. In the current exemplary embodiment of the present invention, the four directions are directions that the user can most easily identify when the four audio thumbnails are output and in general, the four directions extend at 30° and - 30° in front of a user, in relation to a user's point of view, and 110° and - 110° behind the user, also in relation to the user's point of view. Thus, the channels each having the four directions are a right (R) channel in a user's forward right direction, a left (L) channel in a user's forward left direction, a left surround (Ls) channel in a user's backward left direction, and a right surround (Rs) channel in a user's backward right direction. That is, the channel allocating unit 106 allocates the R channel, the L channel, the Ls channel, and the Rs channel to each of the audio thumbnails extracted by the audio thumbnail extracting unit 105.

The first output controller 107 separates the audio thumbnails having the allocated channels by the channel allocating unit 106 into the R channel, the L channel, the Ls channel, and the Rs channel and simultaneously outputs them, thereby generating and simultaneously outputting an R channel output signal, an L channel output signal, an Ls channel output signal, and an Rs channel output signal.

The R channel D/A converter 108 converts the R channel output signal output from the first output controller 107 into an analog signal and outputs the analog signal to an R channel speaker. The R channel output signal output from the first output controller 107 is a digital signal in the form of a PCM signal and should be

converted into an analog signal so that the user can hear sound corresponding to the R channel output signal.

The L channel D/A converter 109 converts the L channel output signal output from the first output controller 107 into an analog signal and outputs the analog signal to an L channel speaker. The L channel output signal output from the first output controller 107 is a digital signal in the form of a PCM signal and should be converted into an analog signal so that the user can hear sound corresponding to the L channel output signal.

The Ls channel D/A converter 110 converts the Ls channel output signal output from the first output controller 107 into an analog signal and outputs the analog signal to an Ls channel speaker. The Ls channel output signal output from the first output controller 107 is a digital signal in the form of a PCM signal and should be converted into an analog signal so that the user can hear sound corresponding to the Ls channel output signal.

The Rs channel D/A converter 111 converts the Rs channel output signal output from the first output controller 107 into an analog signal and outputs the analog signal to an Rs channel speaker. The Rs channel output signal output from the first output controller 107 is a digital signal in the form of a PCM signal and should be converted into an analog signal so that the user can hear sound corresponding to from the Rs channel output signal.

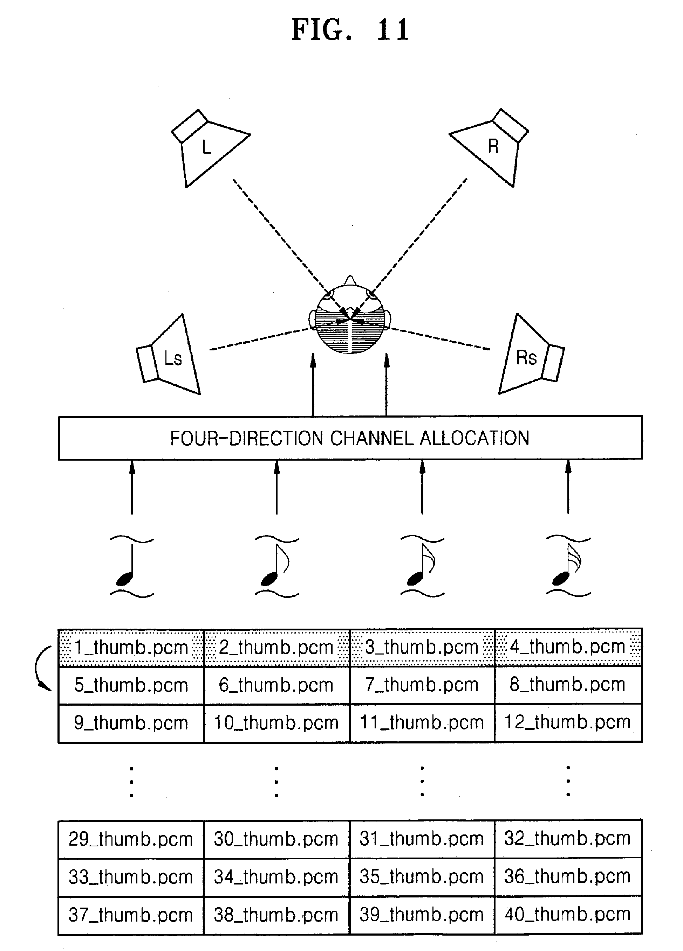

FIG. 11 is a diagram illustrating an example in which the user simultaneously hears the audio thumbnails by using the second audio reproduction apparatus illustrated in FIG. 10. Referring to FIG. 11, the user simultaneously hears the audio thumbnails separated into the R channel, the L channel, the Ls channel, and the Rs channel and output using the second audio reproduction apparatus illustrated in FIG. 10. That is, the user hears a first audio thumbnail 1_thumb.pcm from the R channel speaker in a user's forward right direction, hears a second audio thumbnail 2_thumb.pcm from the L channel speaker in a user's forward left direction, hears a third audio thumbnail 3_thumb.pcm from the Ls channel speaker in a user's backward left direction, and hears a fourth audio thumbnail 4_thumb.pcm from the Rs channel speaker in a user's backward right direction

Referring to FIG. 10, the user interface 104 receives selection information on one of the four audio thumbnails using the input panel 42 attached to the second audio reproduction apparatus illustrated in FIG. 10 from the user who has heard the simultaneously-output four audio thumbnails that are separated into the R channel, the L channel, the Ls channel, and the Rs channel and output through the R channel speaker, the L channel speaker, the Ls channel speaker, and the Rs channel speaker.

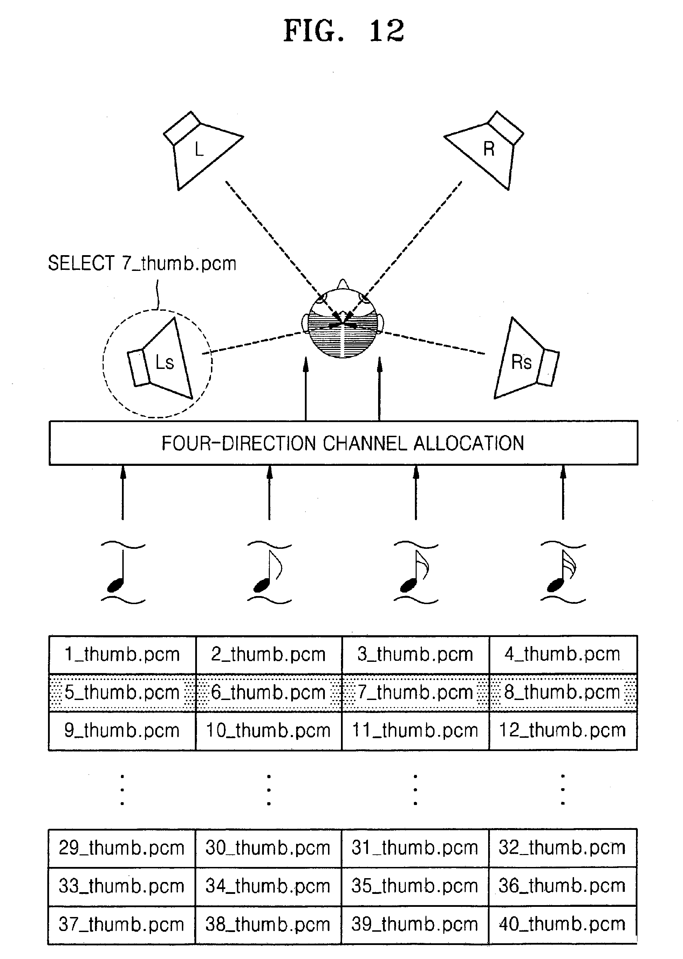

FIG. 12 is a diagram illustrating an example in which the user selects one of the audio thumbnails by using the second audio reproduction apparatus illustrated in FIG. 10. Referring to FIG. 12, the user simultaneously hears the audio thumbnails 1_thumb.pcm, 2_thumb.pcm, 3_thumb.pcm, and 4_thumb.pcm that are separated into the R channel, the L channel, the Ls channel, and the Rs channel and output using the second audio reproduction apparatus illustrated in FIG. 10. Subsequently, the user presses the search button of the input panel 42 attached to the second audio reproduction apparatus and hears sound output from next audio thumbnails 5_thumb.pcm, 6_thumb.pcm, 7_thumb.pcm, and 8_thumb.pcm that are separated into the R channel, the L channel, the Ls channel, and the Rs channel and output. Subsequently, the user presses the selection button of the input panel 42 attached to the second audio reproduction apparatus illustrated in FIG. 10 to select one of the audio thumbnails, that is, 7_thumb.pcm.

Referring to FIG. 10, the audio file extracting unit 112 extracts one of the audio files stored in the audio file database 102 based on the selection information received by the user interface 104. That is, the audio file extracting unit 112 extracts an audio file indicated by the selection information received by the user interface 104 from the audio files stored in the audio file database 102.

The second output controller 113 separates the audio files extracted by the audio file extracting unit 112 into the R channel, the L channel, the Ls channel, and the Rs channel and outputs them, thereby generating an R channel output signal, an L channel output signal, an Ls channel output signal, and an Rs channel output signal. That is, the second output controller 113 outputs one of the audio files stored in the audio file database 102 based on the selection information received by the user interface 104.

The R channel D/A converter 108 converts the R channel output signal output from the second output controller 113 into an analog signal and outputs the analog signal to the R channel speaker. The R channel output signal output from the second output controller 113 is a digital signal in the form of a PCM signal and should be converted into an analog signal so that the user can hear R channel sound corresponding to the R channel output signal. As such, the user hears R channel sound of the selected audio files, through the right speaker of the headphones.

The L channel D/A converter 109 converts the L channel output signal output from the second output controller 113 into an analog signal and outputs the analog signal to the L channel speaker. The L channel output signal output from the second output controller 113 is a digital signal in the form of a PCM signal and should be converted into an analog signal so that the user can hear sound corresponding to the L channel output signal. As such, the user hears L channel sound of the selected audio files through the left speaker of the headphones.

The Ls channel D/A converter 110 converts the Ls channel output signal output from the second output controller 113 into an analog signal and outputs the analog signal to the Ls channel speaker. The Ls channel output signal output from the second output controller 113 is a digital signal in the form of a PCM signal and should be converted into an analog signal so that the user can hear Ls channel sound corresponding to the Ls channel output signal. As such, the user hears Ls channel sound of the selected audio files through the left speaker of the headphones.

The Rs channel D/A converter 111 converts the Rs channel output signal output from the second output controller 113 into an analog signal and outputs the analog signal to the Rs channel speaker. The Rs channel output signal output from the second output controller 113 is a digital signal in the form of a PCM signal and should be converted into an analog signal so that the user can hear Rs channel sound corresponding to the Rs channel output signal. As such, the user hears Rs channel sound of the selected audio files through the right speaker of the headphone.

As described above, the user who does not have a two-channel speaker system such as the first audio reproduction apparatus illustrated in FIG. 2 but has a multi-channel speaker system hears the audio thumbnails using the second audio reproduction apparatus illustrated in FIG. 10 and subsequently can hear the previous section 7_song.pcm of the audio files in which the selected audio thumbnail 7_thumb.pcm is used as a partial section.

The multi-channel speaker system used in the current exemplary embodiment of the present invention illustrated in FIG. 10 is generally a 5.1-channel speaker system installed in a house. However, it will be understood by those skilled in the art that the multi-channel speaker system is a speaker system installed inside a set of headphones.

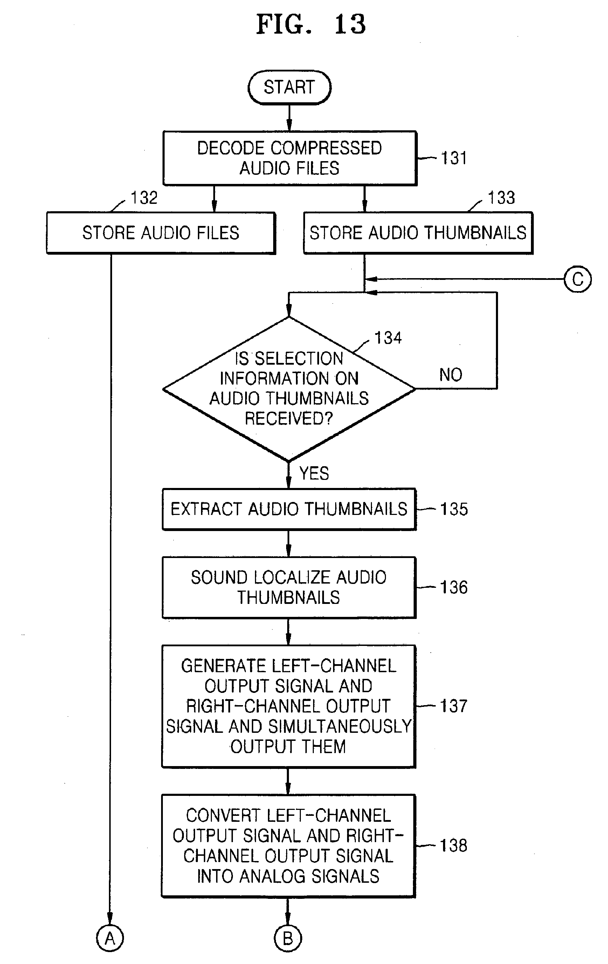

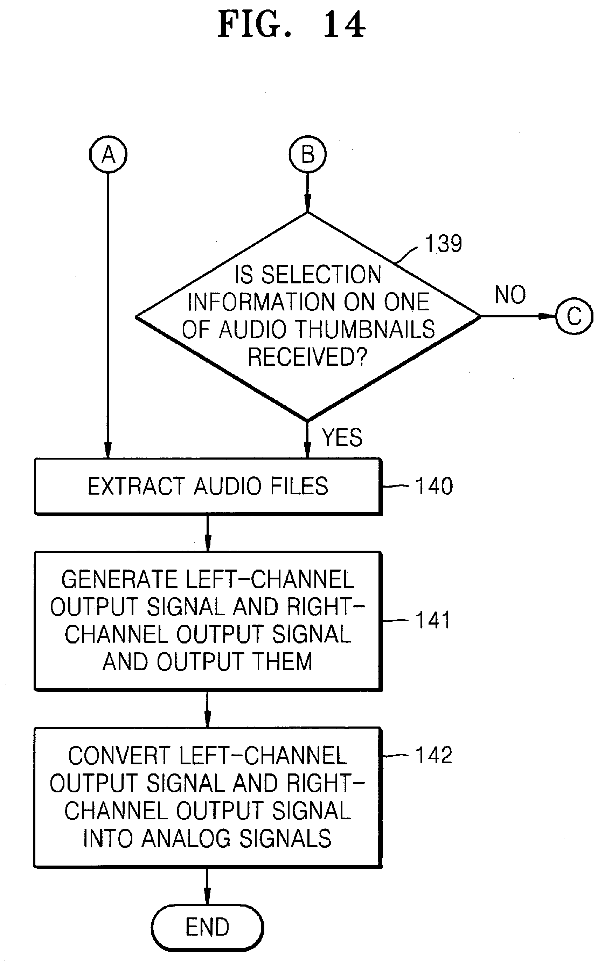

FIGS. 13 and 14 are flowcharts illustrating a first audio reproduction method according to an exemplary embodiment of the present invention.

Referring to FIGS. 13 and 14, the first audio reproduction method comprises the following operations performed in a time series manner using the first audio reproduction apparatus illustrated in FIG. 2. Thus, although omitted hereinafter, the described first audio reproduction apparatus illustrated in FIG. 2 are applied to the first audio reproduction method illustrated in FIGS. 13 and 14.

In step 131, the first audio reproduction apparatus decodes the compressed audio files obtained via the Internet to restore audio files in the form of PCM signals.

In step 132, the first audio reproduction apparatus stores the audio files restored in step 131.

In step 133, the first audio reproduction apparatus generates audio thumbnails that represent each of the audio files from the audio files restored in step 131 and stores the audio thumbnails.

In step 134, the first audio reproduction apparatus displays the audio thumbnails stored in step 133 to the user and receives selection information on four audio thumbnails among the audio thumbnails from the user who has recognized this display. If the selection information on the four audio thumbnails is received in step 134, a next step, that is, step 135 is performed, and if not, the first audio reproduction apparatus waits for the selection information to be received in step 134.

In step 135, the first audio reproduction apparatus extracts the four audio thumbnails from the audio thumbnails stored in the audio thumbnail database 23 based on the selection information received in step 134.

In step 136, the first audio reproduction apparatus sound-localizes the audio thumbnails extracted in step 135 into four directions. More specifically, in step 136, the first audio reproduction apparatus sound-localizes the audio thumbnails extracted in step 135 into the four directions using a head related transfer function (HRTF).

In step 137, the first audio reproduction apparatus simultaneously outputs the audio thumbnails sound-localized in step 136. More specifically, in step 137, the first audio reproduction apparatus synthesizes signals of the audio thumbnails sound-localized in step 136, thereby generating and simultaneously outputting a left-channel output signal and a right-channel output signal.

In step 138, the first audio reproduction apparatus converts the left channel output signal and the right channel output signal, which are output in step 137, into analog signals, and outputs the analog signals to a left speaker and a right speaker of a user's headphones.

In step 139, the first audio reproduction apparatus receives selection information on one of the four audio thumbnails from the user who has simultaneously heard the four audio thumbnails that are virtually and three-dimensionally processed using the user's headphones. If the selection information on one of the four audio thumbnails is received in step 139, a next step, that is, step 140 is performed, and if not, the method returns to step 134.

In step 140, the first audio reproduction apparatus extracts one of the audio files stored in step 132 based on the selection information received in step 139.

In step 141, the first audio reproduction apparatus generates and outputs a left-channel output signal and a right-channel output signal from the audio files extracted in step 140.

In step 142, the first audio reproduction apparatus converts the left-channel output signal and the right-channel output signal output in step 140 and outputs the analog signals to the left speaker and the right speaker of the user's headphones.

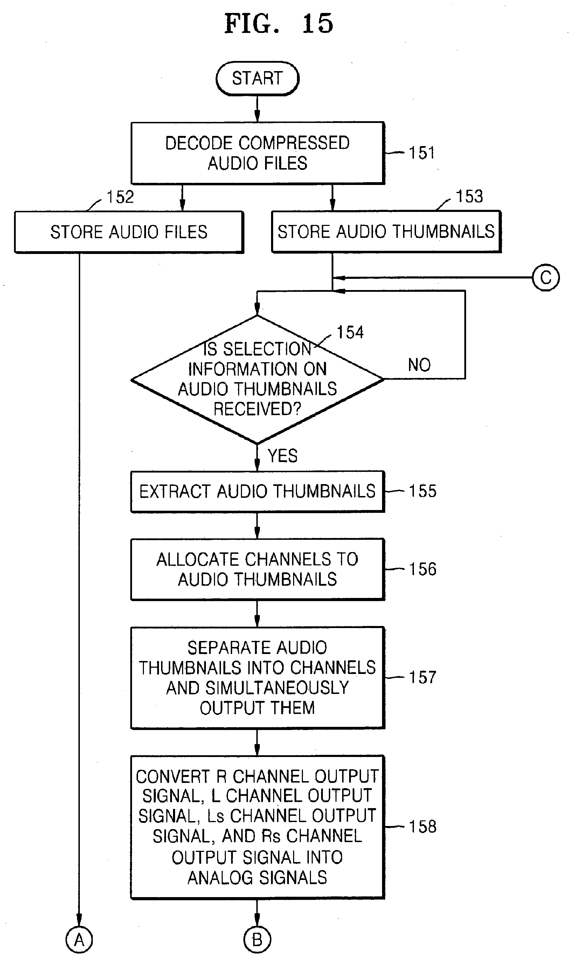

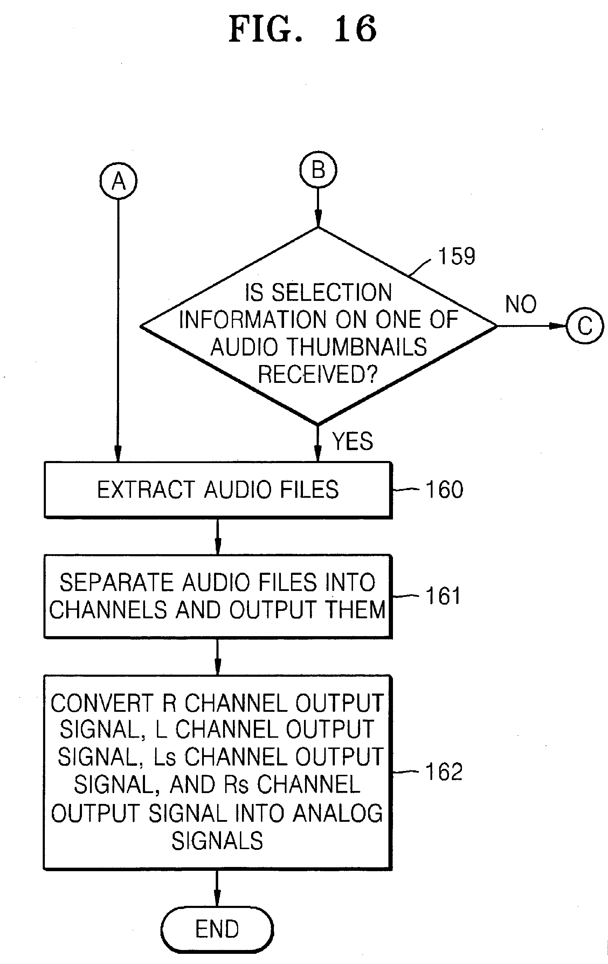

FIGS. 15 and 16 are flowcharts illustrating a second audio reproduction method according to an exemplary embodiment of the present invention. Referring to FIGS. 15 and 16, the second audio reproduction method comprises the following operations performed in a time series manner using the second audio reproduction apparatus illustrated in FIG. 10. Thus, although omitted hereinafter, the described second audio reproduction apparatus illustrated in FIG. 10 are applied to the second audio reproduction method illustrated in FIGS. 15 and 16.

In step 151, the second audio reproduction apparatus decodes the compressed audio files obtained via the Internet to restore audio files in the form of PCM signals.

In step 152, the second audio reproduction apparatus stores the audio files restored in step 151.

In step 153, the second audio reproduction apparatus generates audio thumbnails that represent each of the audio files from the audio files restored in step 151 and stores the audio thumbnails.

In step 154, the second audio reproduction apparatus displays the audio thumbnails stored in step 153 to the user and receives selection information on four audio thumbnails among the audio thumbnails from the user who has recognized this display. If the selection information on the four audio thumbnails is received in step 154, a next step, that is, step 155 is performed, and if not, the second audio reproduction apparatus waits for the selection information to be received in step 154.

In step 155, the second audio reproduction apparatus extracts the four audio thumbnails from the audio thumbnails stored in step 153 based on the selection information received in step 154.

In step 156, the second audio reproduction apparatus allocates channels each having four directions to the audio thumbnails extracted in step 155. That is, in step 156, the second audio reproduction apparatus allocates an R channel, an L channel, an Ls channel, and an Rs channel to each of audio thumbnails extracted in step 155.

In step 157, the second audio reproduction apparatus separates the audio thumbnails having the channels allocated in step 156 into the R channel, the L channel, the Ls channel, and the Rs channel and simultaneously outputs them, thereby generating and simultaneously outputting the R channel output signal, the L channel output signal, the Ls channel output signal, and the Rs channel output signal.

In step 158, the second audio reproduction apparatus converts the R channel output signal, the L channel output signal, the Ls channel output signal, and the Rs channel output signal, which are output in step 157, into analog signals and outputs each of the analog signals to the R channel speaker, the L channel speaker, the Ls channel speaker, and the Rs channel speaker.

In step 159, the second audio reproduction apparatus receives selection information on one of the four audio thumbnails from the user who has simultaneously heard - the audio thumbnails that are separated into the R channel, the L channel, the Ls channel, and the Rs channel using the R channel speaker, the L channel speaker, the Ls channel speaker, and the Rs channel speaker in step 158 through the input panel 42 attached to the second audio reproduction apparatus illustrated in FIG. 10. If the selection information on one of the four audio thumbnails is received in step 159, a next step, that is, step 160 is performed, and if not, the method returns to step 154.

In step 160, the second audio reproduction apparatus extracts one of the audio files stored in step 152 based on the selection information received in step 159.

In step 161, the second audio reproduction apparatus separates the audio files extracted in step 160 into the R channel, the L channel, the Ls channel, and the Rs channel and outputs them, thereby generating and outputting the R channel output signal, the L channel output signal, the Ls channel output signal, and the Rs channel output signal.

In step 162, the second audio reproduction apparatus converts the R channel output signal, the L channel output signal, the Ls channel output signal, and the Rs channel output signal, which are output in step 161, into analog signals and outputs each of the analog signals to the R channel speaker, the L channel speaker, the Ls channel speaker, and the Rs channel speaker.

The exemplary embodiments of the present invention can be written as computer programs and can be implemented in general-use digital computers that execute the programs using a computer readable recording medium. Examples of the computer readable recording medium comprise magnetic storage media (for example, ROM, floppy disks, hard disks, and so on), optical recording media (for example, CD-ROMs, or DVDs), and storage media such as carrier waves (for example, transmission through the Internet).

The invention can also be embodied as computer readable code on a computer readable recording medium. A computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While this invention has been particularly shown and described with reference to exemplary embodiments thereof, it will be understood by those skilled in the art that various changes in form and details may be made therein without departing from the scope of the invention as defined by the appended claims and their equivalents. The exemplary embodiments should be considered in descriptive sense only and not for purposes of limitation. Therefore, the scope of the invention is defmed not by the detailed description of the invention but by the appended claims, and all differences within the scope will be construed as being included in the present invention.

## Claims

1. An audio reproduction method comprising : localizing (136) audio thumbnails that respectively represent a predetermined number of audio files using partial sections of the respective audio files, as virtual sound sources in a plurality of directions whose number is the same as the predetermined number; substantially simultaneously outputting (137) the localized audio thumbnails; and outputting (141) a full section of one of the audio files based on a selection of a user who has heard the outputted audio thumbnails; wherein the localizing of the audio thumbnails comprises localizing the audio thumbnails in the predetermined number of directions using a head related transfer function (HRTF).

2. The audio reproduction method of claim 1, wherein the outputting of the localized audio thumbnails comprises synthesizing the localized audio thumbnails to generate a left-channel output signal and a right-channel output signal and to substantially simultaneously output the left-channel output signal and the right-channel output signal.

3. The audio reproduction method of claim 1, further comprising extracting (135) the predetermined number of audio thumbnails from a plurality of audio thumbnails based on the user's selection, wherein the outputting (137) of the localized audio thumbnails comprises outputting the extracted audio thumbnails.

4. The audio reproduction method of claim 1, further comprising receiving selection information on one of the audio thumbnails from the user who has heard the outputted audio thumbnails, wherein the outputting (141) of one of the audio files based on the user's selection comprises outputting the audio file based on the received selection information.

5. A computer-readable recording medium having recorded thereon a program for executing the audio reproduction method of claims 1-4.

6. An audio reproduction apparatus comprising: a sound controller (26) for localizing audio thumbnails that respectively represent a predetermined number of audio files using partial sections of the respective audio files, as virtual sound sources into a plurality of directions whose number is the same as the predetermined number; a first output controller (27) for substantially simultaneously outputting the audio thumbnails localized by the sound controller (26); and a second output controller (31) for outputting full section of one of the audio files based on a selection of a user who has heard the audio thumbnails outputted by the first output controller (27); wherein the sound controller (26) comprises at least one head related transfer function (HRTF) coefficient database (61) and a convolution unit (62).

## Patentansprüche

1. Audiowiedergabeverfahren, umfassend: Lokalisieren (136) von Audiominiaturen, die jeweils eine vorgegebene Anzahl von Audiodateien mittels Teilbereichen der jeweiligen Audiodateien darstellen, als virtuelle Soundquellen in mehreren Richtungen, deren Anzahl die gleiche ist wie die vorgegebene Anzahl; im Wesentlichen gleichzeitiges Ausgeben (137) der lokalisierten Audiominiaturen; und Ausgeben (141) eines Vollbereichs einer der Audiodateien auf Grundlage einer Auswahl eines Benutzers, der die ausgegebenen Audiominiaturen gehört hat; wobei das Lokalisieren der Audiominiaturen das Lokalisieren der Audiominiaturen in der vorgegebenen Anzahl von Richtungen mittels einer kopfbezogenen Übertragungsfunktion (HRTF: Head Related Transfer Function) umfasst.

2. Audiowiedergabeverfahren nach Anspruch 1, wobei das Ausgeben der lokalisierten Audiominiaturen das Synthetisieren der lokalisierten Audiominiaturen umfasst, um ein Linkskanal-Ausgabesignal und ein Rechtskanal-Ausgabesignal zu erzeugen und um das Linkskanal-Ausgabesignal und das Rechtskanal-Ausgabesignal im Wesentlichen gleichzeitig auszugeben.

3. Audiowiedergabeverfahren nach Anspruch 1, das weiterhin das Herausziehen (135) der vorgegebenen Anzahl von Audiominiaturen aus mehreren Audiominiaturen auf Grundlage der Auswahl des Benutzers umfasst, wobei das Ausgeben (137) der lokalisierten Audiominiaturen das Ausgeben der herausgezogenen Audiominiaturen umfasst.

4. Audiowiedergabeverfahren nach Anspruch 1, das weiterhin das Empfangen von Auswahlinformationen über eine der Audiominiaturen von dem Benutzer umfasst, der die ausgegebenen Audiominiaturen gehört hat, wobei das Ausgeben (141) einer der Audiodateien auf Grundlage der Auswahl des Benutzers das Ausgeben der Audiodatei auf Grundlage der empfangenen Auswahlinformationen umfasst.

5. Computerlesbares Aufzeichnungsmedium mit einem auf demselben aufgezeichneten Programm zum Ausführen des Audiowiedergabeverfahrens nach Ansprüchen 1-4.

6. Audiowiedergabevorrichtung, umfassend: einen Soundcontroller (26) zum Lokalisieren von Audiominiaturen, die jeweils eine vorgegebene Anzahl von Audiodateien mittels Teilbereichen der jeweiligen Audiodateien darstellen, als virtuelle Soundquellen in mehreren Richtungen, deren Anzahl die gleiche ist wie die vorgegebene Anzahl; einen ersten Ausgabecontroller (27) zum im Wesentlichen gleichzeitigen Ausgeben der durch den Soundcontroller (26) lokalisierten Audiominiaturen; und einen zweiten Ausgabecontroller (31) zum Ausgeben eines Vollbereichs einer der Audiodateien auf Grundlage einer Auswahl eines Benutzers, der die durch den ersten Ausgabecontroller (27) ausgegebenen Audiominiaturen gehört hat; wobei der Soundcontroller (26) zumindest eine Kopfbezogene-Übertragungsfunktions-(HRTF: Head Related Transfer Function)-Koeffizientendatenbank (61) und eine Konvolutionseinheit (62) umfasst.

## Revendications

1. Procédé de restitution audio comprenant : la localisation (136) de vignettes audio qui représentent respectivement un nombre prédéterminé de fichiers audio en un même nombre de fichiers audio en utilisant des sections partielles des fichiers audio respectifs, en tant que sources sonores virtuelles dans une pluralité de directions ; l'émission (137) de manière sensiblement simultanée des vignettes audio localisées ; et l'émission (141) d'une section complète de l'un des fichiers audio sur la base d'une sélection effectuée par un utilisateur ayant écouté les vignettes audio émises ; la localisation des vignettes audio comprenant la localisation des vignettes audio en le nombre prédéterminé de directions au moyen d'une fonction de transfert de la tête (HRTF).

2. Procédé de restitution audio selon la revendication 1, dans lequel l'émission des vignettes audio localisées comprend la synthétisation des vignettes audio localisées pour générer un signal de sortie de canal gauche et un signal de sortie de canal droit et pour émettre de manière sensiblement simultanée le signal de sortie de canal gauche et le signal de sortie de canal droit.

3. Procédé de restitution audio selon la revendication 1, comprenant en outre l'extraction (135) du nombre prédéterminé de vignettes audio d'une pluralité de vignettes audio sur la base de la sélection effectuée par l'utilisateur, l'émission (137) des vignettes audio localisées comprenant l'émission des vignettes audio extraites.

4. Procédé de restitution audio selon la revendication 1, comprenant en outre la réception d'informations de sélection relatives à l'une des vignettes audio fournies par l'utilisateur qui a écouté les vignettes audio émises, l'émission (141) de l'un des fichiers audio sur la base de la sélection effectuée par l'utilisateur comprenant l'émission du fichier audio sur la base des informations de sélection reçues.

5. Support d'enregistrement lisible par ordinateur, comportant l'enregistrement d'un programme permettant d'exécuter le procédé de restitution audio selon les revendications 1 à 4.

6. Appareil de restitution audio comprenant : un contrôleur sonore (26) destiné à localiser des vignettes audio représentant respectivement un nombre prédéterminé de fichiers audio en utilisant des sections partielles des fichiers audio respectifs, en tant que sources sonores virtuelles dans une pluralité de directions dont le nombre est le même que le nombre prédéterminé ; un premier contrôleur d'émission (27) destiné à émettre de manière sensiblement simultanée les vignettes audio localisées par le contrôleur sonore (26) ; et un second contrôleur d'émission (31) destiné à émettre la section complète de l'un des fichiers audio sur la base d'une sélection effectuée par un utilisateur ayant écouté les vignettes audio émises par le premier contrôleur d'émission (27) ; le contrôleur sonore (26) comprenant au moins une base de données (61) de coefficients de fonction de transfert de la tête (HRTF) et une unité de convolution (62).
